# EUROPEAN PATENT SPECIFICATION

(11) **EP 2 040 509 B1**
(45) Date of publication and mention of the grant of the patent: **23.02.2011**
(21) Application number: 07291116.7
(22) Date of filing: 19.09.2007
(51) Int. Cl.: H04W 24/10, H04B 17/00

(54) **Communication device and method of allocating a measurement time period for a receiver of a communication device**
Kommunikationsvorrichtung und -verfahren zur Zuweisung einer Messzeit für einen Empfänger einer Kommunikationsvorrichtung
Procédé et dispositif de communication pour allouer une période de mesure à un récepteur d'un dispositif de communication

(43) Date of publication of application: 25.03.2009
(73) Proprietor: Motorola, Inc., Schaumburg, IL 60196 (US)
(72) Inventor: Fouassier, Yann, 31520 Ramonville-Saint-Agne (FR); Storm, Brian D., Round Lake Be, Illinois 60073 (US); Tancerel, Ludovic, 31200 Toulouse (FR)
(74) Representative: Cross, Rupert Edward Blount

(56) References cited:
- EP-A- 0 892 571
- US-A1- 2007 037 594
- US-A1- 2007 207 824
- "Universal Mobile Telecommunications System (UMTS); Physical layer; Measurements (FDD) (3GPP TS 25.215 version 7.1.0 Release 7); ETSI TS 125 215" ETSI STANDARDS, EUROPEAN TELECOMMUNICATIONS STANDARDS INSTITUTE, SOPHIA-ANTIPO, FR, vol. 3-R1, no. V710, September 2006 (2006-09), XP014035554 ISSN: 0000-0001

## Description

### Field of the Invention

This invention relates to a communication device having a receiver configured for operation with a first communication system and with a second communication system and a method of allocating a measurement time period for the receiver of such a communication device.

### Background of the Invention

There is increasing demand for individual wireless communication devices that are operable with more than one communication system, each having a different Radio Access Technology (RAT). This may be desirable in applications where the alternative systems available have different features, for example it may be desirable for cellular telephones to be operable with both second generation systems, for instance the Global System for Mobile communication (GSM), and third generation systems, for instance systems based on Wideband Code Division Multiple Access (WCDMA) technology.

Such alternative systems may operate on different frequencies. They may additionally or alternatively operate with different protocols. Hence, it is difficult to design an efficient communication device operable on multiple communication systems. Many existing communication devices comprise an individual, separate transmitter and receiver for each communication system with which they are operable. Use of a single receiver, operable with multiple communication systems would be advantageous, for example, in order to reduce the size and cost of such communication devices.

However, the single receiver has to be shared between the different communication systems. This can be a problem: for instance, the requirements of multiple communication systems may conflict, or there may be interference issues. A specific example of a conflict may occur when the protocol of many communication systems demands the receiver to be operational with that system at specified time slots. In other words, the transmit and receive periods of such communication systems may be time constrained, for instance in GSM systems. Moreover, due to interference problems, it may not be possible to operate the single receiver with one communication system when a transmitter in the communication device is operating with that system.

For instance, when a cellular telephone is operating in a call with a GSM system, it is allocated at least one reception slot and at least one transmission slot per time frame, where a time frame has a predetermined length. During an allocated reception slot, the receiver is unavailable for other tasks. During an allocated transmission slot, the receiver can operate with a different communication system, for instance a WCDMA system, since this operates on substantially different frequencies. However, the receiver is unavailable for tasks which require operation with the GSM system, due to the interference caused between the transmitter and receiver in the cellular telephone.

It is also advantageous for the communication device receiver to take measurements with respect to one or more communication systems at regular intervals. For instance, both GSM and WCDMA systems require cellular telephones to take measurements with respect to neighbouring cell base station transmitters. In GSM, this is known as a neighbouring cell measurement (MX) period. Such measurement periods facilitate handover between cells of a single system and between different systems. Due to its maturity, GSM coverage is currently much more ubiquitous than WCDMA coverage. However, because WCDMA is a more feature rich RAT, operators want 3G devices to spend as much time on WCDMA as possible. While on GSM, frequent WCDMA measurements are essential to the early detection and reporting of WCDMA availability for reliable hand over with acceptable call quality.

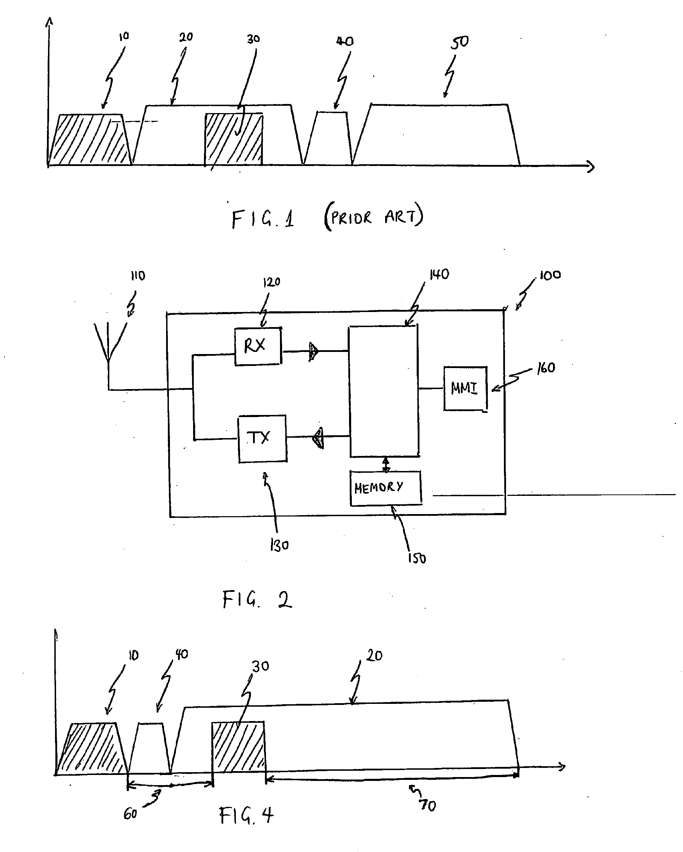

FIG. 1 is a timing diagram, which is not shown to scale, illustrating a typical distribution of time periods in existing systems for operation of a communication device, having a single receiver, with two communication systems. A single time frame is shown. GSM reception (RX) time period 10 and GSM transmission (TX) time period 30 are allocated by the GSM communication system. These are therefore shown as shaded. At least a WCDMA RX time period and a GSM MX time period are allocated by a Mobile Station (MS). The MS allocates a first WDCMA RX time period 20 after the GSM RX time period 10. Within first WCDMA RX time period 20, is the GSM transmission (TX) time period 30. These two periods can overlap because the GSM transmitter does not interfere with the WCDMA receiver in this example. However, the GSM transmitter does cause interference to the receiver, when the receiver is operating with the GSM communication system, in this example.

The GSM MX period 40 is allocated after the first WCDMA RX time period 20. The GSM MX period 40 cannot overlap with a WCDMA RX time period, since use of the receiver is required in both time periods. Hence, after the GSM MX period 40, a second WCDMA RX period 50 follows.

If usage of the receiver is not shared efficiently, operation with one or more communication system may be impaired, for example leading to poor call quality, reduced data throughput or dropped calls. For example, in a WCDMA system, performance may be improved by increasing the length of reception periods and reducing the number of discontinuities between reception periods. For example in FIG. 1, the discontinuity between the first WCDMA RX period 20 and second WCDMA RX period 50 reduces performance of communication with the WCDMA communication system.

Thus, in view of the requirements for using the single receiver of the communication device for the different communication systems, there is a need to optimise sharing of the receiver.

European patent application publication no. EP-A-0892571 describes a method for allocating idle time to a mobile station. A mobile station can request idle time from a network (e.g. for measuring strengths of signals from base stations). Having received the request, the network checks whether suitable idle time is coming up and if not, allocates idle time according to the request by the mobile station. The network informs the mobile station about when and how much the mobile station has measurement time available.

### Summary of the Invention

In accordance with the present invention, there is provided a method of allocating a measurement time period for a receiver of a communication device for a first communication system, as claimed in claim 1 of the accompanying claims.

In accordance with another aspect of the present invention, there is provided a communication device for operation with a first communication system and with a second communication system, as claimed in claim 9 of the accompanying claims.

### Brief Description of the Drawings

A method of allocating a measurement time period for a receiver of a communication device for a first communication system and a communication device for operation with a first communication system and with a second communication system will now be described, by way of example only, with reference to the accompanying drawings in which:
FIG. 1 is a timing diagram, illustrating a distribution of time periods in an existing system for operation of a communication device with two communication systems and having a single receiver and is not drawn to scale;
FIG. 2 is a block diagram of a communication device in accordance with an embodiment of the disclosure;
FIG. 3 is a flow diagram, showing a method for allocating a measurement time period, in accordance with an embodiment of the disclosure;
FIG. 4 is a timing diagram, illustrating an exemplary distribution of time periods over a single Traffic Channel (TCH) frame, for operation of a communication device with two communication systems, in accordance with the disclosure and is not drawn to scale;
FIG. 5 is a timing diagram, illustrating an exemplary distribution of time periods over two TCH frames, for operation of a communication device with two communication systems, in accordance with the disclosure and is not drawn to scale;
FIG. 6 is a timing diagram, illustrating an exemplary distribution of time periods over two TCH frames, for operation of a communication device with two communication systems and when the communication device is operating at half rate with the first communication system, in accordance with the disclosure and is not drawn to scale; and
FIG. 7 is a timing diagram, illustrating an exemplary distribution of time periods, for operation of a communication device with two communication systems and when the communication device is operating in a data mode with the first communication system, in accordance with the disclosure.

### Detailed Description of the Drawings

The present disclosure will be described with reference to the GSM and WCDMA communication systems, but it will be appreciated that the present disclosure may apply to any combination of different communication systems, which may be selected from, for example: Private Mobile Radio (PMR); GSM; Enhanced Data rates for GSM Evolution (EDGE); General Packet Radio System (GPRS); WCDMA or Universal Mobile Telecommunications System (UMTS), Third Generation Long Term Evolution (LTE); Wireless Local Area Networks (WLAN); Worldwide Interoperability for Microwave Access (WIMAX); Bluetooth; or the like.

FIG. 2 is a block diagram of a communication device in accordance with the disclosure. The communication device 100 may be a portable or mobile telephone, a Personal Digital Assistant (PDA), a wireless video or multimedia device, a portable computer, or similar wireless communication device. In the following description, reference is made to a communication device comprising a Mobile Station (MS).

The MS 100 comprises an antenna 110 coupled to both a receiver 120 and a transmitter 130. The transmitter 130 is configured for operation with a GSM communications system. The transmitter 130 is also configured for operation with a WCDMA communications system. The receiver 120 is configured to operate with both the GSM communications system and the WCDMA communications system. The receiver 120 and transmitter 130 can be configured independently from one another. As an example, whilst the transmitter is configured for GSM operation, the receiver could be configured for concurrent WCDMA operation. Nevertheless, a single transmitter or single receiver can only be configured for a single mode at any point in time.

Both the receiver 120 and transmitter 130 are coupled to a processor 140. A processor can be defined as a component or a group of components comprised of any suitable combination of hardware and software to carry out the processes described herein. Processor 140 is coupled to memory 150 and to a man-machine interface (MMI) 160. The MMI 160 includes elements such as a key pad, microphone, speaker, display screen, for providing an interface between the MS and the user of the MS.

Memory 150 stores programs containing processor instructions for operation of the MS 100. The program memory 150 is shown in FIG. 2 as a separate component of the MS 100 to the processor 140 but may be part of the processor 140 itself. The programs in the memory 150 may contain a number of different program elements or sub-routines containing processor instructions for a variety of different tasks, for example: for exchanging signals with the base station to establish a communication, for sending or receiving speech, text, multimedia or other data, for communicating with the user via the MMI 160.

The memory 150 also includes instructions for the processor to control operation of the receiver 120 and transmitter 130. The instructions configure the processor to control the time periods for operation of the receiver 120 with either the GSM system, or with the WCDMA system in accordance with the disclosure.

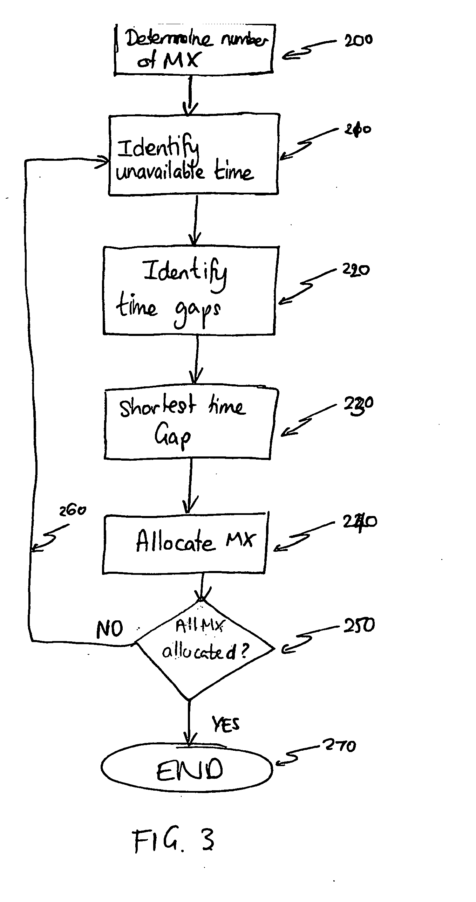

FIG. 3 is a flow diagram, showing a method for allocating a measurement time period, in accordance with an embodiment of the disclosure. Amongst the steps of this method are: identifying a plurality of unavailable time periods 210; identifying time gaps 220; determining the shortest time gap 230; and allocating a measurement time period in the shortest time gap 240.

In the embodiment shown in FIG.3, the method is used to allocate a measurement time period for the MS for the GSM system: the MX time period. The method in accordance with the disclosure is performed by the processor 140 executing control instructions stored in memory 150.

In an embodiment, the number of MX periods that are desirable is first determined by determining an MX frame period in step 200. The MX frame period is a period of time, based on which the protocol of the communication system defines the number of MX time periods that are required. For example in a GSM system, an MX frame period may correspond with: the length of a TCH frame and one MX must be performed in that frame; or, in idle mode, with the length of a paging period and the number of MX time periods required is based on the number of Broadcast Control Channel (BCCH) carriers to monitor.

In step 210, unavailable time periods are identified. Each unavailable time period is at least a time period when the receiver is allocated to operate with the first communication system. However, each unavailable time period may be one of: a time period when the receiver is allocated to operate with one of the first, or the at least a second communication system; or a time period when a transmitter of the communication device is allocated to operate with the first communication system.

In step 220, time gaps are identified. These are time gaps between the end of an unavailable time period and the start of a consecutive unavailable time period. Hence, no unavailable time period falls within a time gap.

In step 230, the shortest time gap from the identified time gaps, into which the measurement time period will fit, is determined. Then, in step 240, the measurement time period is allocated in the shortest determined time gap, substantially adjacent an unavailable time period. In other words, the receiver is not allocated for another purpose or is idle between the start or end of the unavailable time period and the respective end or start of the measurement time period.

In step 250, it is determined if all of the MX to be allocated with the MX frame period have been allocated. If so, then step 270 follows, which is the end. Otherwise, the steps from step 210 onwards are repeated. However, once at least one MX time period has been allocated, it should be noted that an allocated MX time period is a time period when the receiver is allocated to operate with the first communication system. Hence, an allocated MX time period is an unavailable time period.

The method in accordance with an embodiment of the disclosure allocates as many of the MX time periods as required in the MX frame period, which will fit in each identified time gap. The maximum number of MX time periods that can be performed in a given time gap depends on radio ramp-up/ramp-down times, the size of the time gap and the duration of the MX time period.

Examples of how time periods may be allocated using the method of allocating a measurement time period in accordance with an embodiment of the disclosure will now be described with reference to FIG. 4 to FIG. 7.

FIG. 4 is a timing diagram, illustrating an exemplary distribution of time periods over a single TCH frame, for operation of a communication device with two communication systems, in accordance with the disclosure. Since FIG.4 shows a single frame, it should be noted that the time periods in the frame that consecutively follow the illustrated frame are identical to the illustrated frame. Like periods to those in FIG. 1 are referenced by the same reference numerals.

GSM RX time period 10 and GSM TX time period 30 are allocated by the GSM communication system. These are both identified as unavailable time periods by step 210 of the method of FIG. 3. A further GSM RX time period belonging to the consecutively following TCH frame (not shown) is also identified as an unavailable time period.

Two time gaps are therefore identified by step 220 of the method shown in FIG. 3. The first time gap 60 falls between the end of GSM RX time period 10 and the beginning of GSM TX time period 30. The second time gap 70 falls between the end of GSM TX time period 30 and the end of the TCH frame, which may correspond with the start of the GSM RX time period of the consecutively following TCH frame.

Although the diagram of FIG.4 is not to scale, it is recognised that the first time gap 60 is shorter than the second time gap 70. The MX time period is therefore allocated in the first time gap by steps 230 and 240 of the method of FIG. 3.

In the embodiment presently described, the allocation of an MX time period takes into account the switching time of the transmitter and receiver. The MX time period is allocated adjacent to the unavailable time period where the switching time will be less. The time to switch the receiver from the GSM mode to a WCDMA mode is less than the time needed to switch the transmitter on or off. In this case, therefore, the MX time period 40 is allocated adjacent the GSM RX time period 10, rather than the GSM TX time period 30.

Then, the WCDMA RX time period 20 is allocated. Free-receiver time periods are identified. These are time periods when the receiver is not allocated for operation with the GSM system. The receiver is allocated for operation with the GSM system in a GSM RX time period or a GSM MX time period. In the embodiment presently described, a GSM TX time period is a free-receiver time period. The WCDMA RX time period 20 is therefore allocated in the identified free-receiver time period.

It is noted that the WCDMA RX time period 20 is a longer, contiguous time period, when compared with the WCDMA RX time period of FIG. 1. By having a longer contiguous time period, the call performance of the MS with the WCDMA system is improved. A longer, contiguous time period allows more time for correlation of the spreading code used in the WCDMA system and for synchronisation thereby. Correlation in non-contiguous periods of time is more difficult and will degrade performance. The longer, contiguous time period also improves channel estimation. Again, non-contiguous periods of time are unsuitable for this.

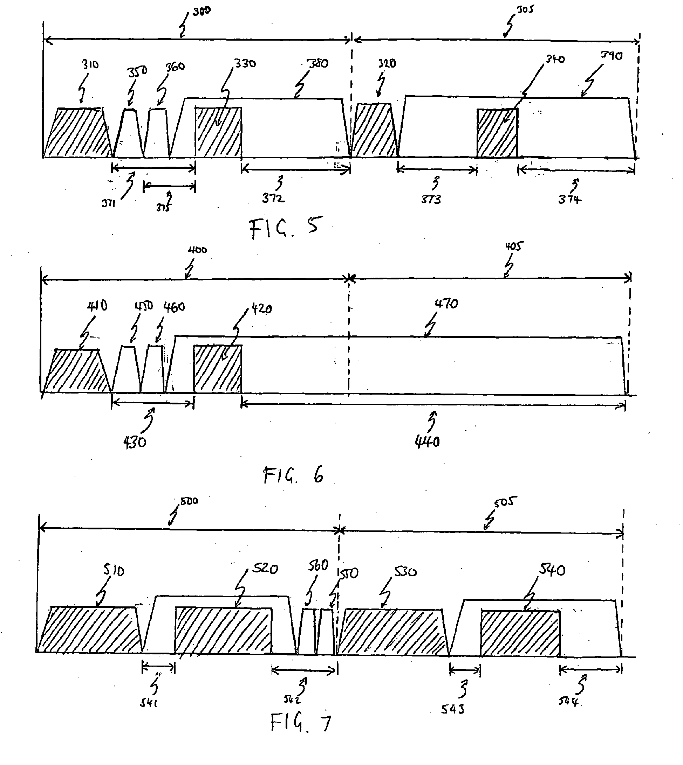

FIG. 5 is a timing diagram, illustrating an exemplary distribution of time periods over two TCH frames, for operation of a communication device with two communication systems, in accordance with the disclosure. The MX frame period is two TCH frames in duration. The first TCH frame 300 is followed by a second TCH frame 305. The duration of the two TCH frames is the same in this embodiment. The GSM communication system requires that a respective MX period is allocated for each TCH period. Step 200 of FIG. 3 therefore determines that two MX time periods are to be allocated.

First GSM RX time period 310, first GSM TX time period 330, second GSM RX time period 320 and second GSM TX time period 340 are allocated by the GSM communication system. These are all identified as unavailable time periods by step 210 of FIG. 3. First GSM RX time period 310 and first GSM TX time period 330 belong to the first TCH frame 300 and second GSM RX time period 320 and second GSM TX time period 340 belong to the second TCH frame 305. A further GSM RX time period belonging to the consecutively following TCH frame (not shown) is also identified as an unavailable time period by step 210 of FIG. 3.

Four time gaps are therefore identified by step 220 of FIG. 3. The first time gap 371 falls between the end of GSM RX time period 310 and the beginning of first GSM TX time period 330. The second time gap 372 falls between the end of first GSM TX time period 330 and the start of second GSM RX time period 320. The third time gap 373 falls between the end of second GSM RX time period 320 and the beginning of second GSM TX time period 340. The fourth time gap 374 falls between the end of second GSM TX time period 340 and the start of the GSM RX time period of the consecutively following TCH frame (not shown).

Although the diagram of FIG.5 is not to scale, it is recognised that the first time gap 371 and third time gap 373 are shorter than the second time gap 372 and fourth time gap 374, by steps 230 and 240 of FIG. 3. An MX time period can therefore be allocated either in the first time gap 371 or in the third time gap 373. The first MX time period is allocated in the first time gap 371. The first MX time period 350 is allocated adjacent the GSM RX time period 310.

The second MX time period is now allocated. The first MX time period 350 is now also identified as an unavailable time period. There are again four time gaps and the second time gap 372, third time gap 373 and fourth time gap 374 are unchanged. However, the first time gap 371 is changed to a modified first time gap 375, which falls between the end of the first MX time period 350 and the start of the GSM TX period 330 and is identified by steps 220 and 230 of FIG.3 as the shortest time gap.

The second MX time period 360 is therefore allocated in the modified first time gap 375. The second MX time period 360 is allocated adjacent the first MX time period 350.

All the required time periods have therefore been allocated. Then, a first WCDMA RX time period 380 is allocated between the end of the second MX time period 360 and the start of the second GSM RX time period 320. A second WCDMA RX time period 390 is allocated between the end of the second GSM RX time period 320 and the end of the second TCH frame, which may correspond with the start of the GSM RX time period of the consecutively following TCH frame.

Thus, by having two MX time periods every two TCH frames (instead of one every TCH frame), then it is noted that the first and second WCDMA RX time periods are each longer, contiguous time periods, when compared with the WCDMA RX time period of FIG. 1. This maximises continuity of the WCDMA activity, which enables faster and more reliable WCDMA measurements and hence improves WCDMA performance.

FIG. 6 is a timing diagram, illustrating an exemplary distribution of time periods over two TCH frames, for operation of an MS with GSM and WCDMA communication systems and when the MS is operating at half rate with the GSM communication system, in accordance with the disclosure. A first TCH frame 400 comprises a first GSM RX time period 410 and a first GSM TX time period 420. Since the MS is operating at half rate, a second TCH frame 405 does not comprise any allocated GSM RX or TX time periods.

It may be noted that when steps 210 and 220 of FIG. 3 are performed, only two time gaps are identified: a first time gap 430 and a second time gap 440. Hence, the first MX time period 450 and second MX time period 460 are allocated in the first, shorter time gap 430. As a result, a long WCDMA RX time period 470 is allocated, which significantly improves performance of the MS with respect to the WCDMA communication system, for at least the reasons discussed above.

The skilled person will appreciate that the MX time period may have a predetermined duration. This may be determined by the protocol or by other considerations, such as equipment or propagation constraints. If this is the case, the MX time period is therefore allocated in the shortest time gap of length at least equal to the predetermined duration.

FIG. 7 is a timing diagram, illustrating an exemplary distribution of time periods, for operation of an MS with GSM and WCDMA systems and when the MS is operating in a data mode with the GSM system, in accordance with the disclosure. A first frame 500 is shown having a first GSM RX time period 510 and a first GSM TX time period 520. A second frame 505 comprises a second GSM RX time period 530 and a second GSM TX time period 540.

The first time gap 541 is smaller than the duration of an MX period. Hence, the first MX period 550 and second MX period 560 are allocated in the second time gap 542. The first MX period 550 is allocated adjacent to the GSM RX time period 530. The second MX period 560 is allocated adjacent to the first MX period 550.

In cases where multi-slot classes are used, the higher the class, the fewer idle slots are available. This yields reduced time for WCDMA measurements and lengthens the time it takes to cover the WCDMA search space. The embodiments of the disclosure maximize the effective utilization of these idle slots when compared to prior art measurement scheduling approaches. For the higher multi slot classes, this can mean the difference between limited WCDMA measurement opportunities and no WCDMA measurement opportunities.

Whilst specific embodiments have been described herein, the skilled person may contemplate various modifications and substitutions.

The skilled person will appreciate that although in the present disclosure, the MS 100 is shown with a single transmitter, the MS 100 may alternatively comprise multiple transmitters, each of which is operable with one or more communication systems.

The skilled person will also understand that although the method described in this disclosure has been implemented in the mobile communication device, the method may be implemented in the network and the time period allocations communicated to a communication device.

Some of the embodiments of the disclosure relate to the case where, when the transmitter and receiver operate with the same communication system, the transmitter causes interference to the receiver. The skilled person will appreciate, however, it is not necessary that the transmitter causes interference in this way.

Where the transmitter does not cause this interference, an unavailable time period does not include a time period when the transmitter is operating with the first communication system. For example, when allocating an MX time period for a GSM communication system for a receiver operative with both the GSM communication system and a WCDMA communication system, an unavailable time period need not include a time period when the transmitter is allocated to be operative with the GSM communication system.

In summary, the present invention provides a method of allocating a measurement time period for a receiver of a communication device for a first communication system, the receiver being configured for operation with the first communication system and with at least a second communication system, the method comprising: identifying a plurality of unavailable time periods, each of said unavailable time periods being one of: a time period when the receiver is allocated to operate with one of the first, or the at least a second communication system; or a time period when a transmitter of the communication device is allocated to operate with the first communication system; identifying time gaps between the end of an unavailable time period and the start of a consecutive unavailable time period; determining the shortest time gap from the identified time gaps; and allocating the measurement time period in the shortest determined time gap, substantially adjacent an unavailable time period.

By allocating a measurement time period for the first communication system in the shortest time gap, the allocation of time periods when the receiver is to operate with a second communication system can be improved. The time periods when the receiver is to operate with a second communication system can thus be made longer, contiguous time periods.

This allows for the sharing of the receiver to be optimised which can have a significant impact on the call performance of the MS. For example, by increasing the time available for WCDMA receive time periods, there is longer for the MS to obtain correlation with the WCDMA system code sequence or sequences. Additionally or alternatively, increasing the time available for WCDMA receive time periods may also provide longer to perform channel estimation or to determine power measurements. Each of these may separately or collectively improve the performance of the MS with respect to WCDMA communication system and facilitate more time spent on the richer feature set supported by WCDMA.

A further example that improves the MS performance occurs where MX time periods are placed close to other actions, instead of allocating the period where the receiver is not used to a WCDMA system, it is possible for the RX or even the whole MS to be put into a 'sleep' mode, to reduce the current that the MS draws.

## Claims

1. A method of allocating a measurement time period for a receiver (120) of a communication device (100) for a first communication system, the receiver (120) being configured for operation with the first communication system and with at least a second communication system, the method comprising:
identifying (210) a plurality of unavailable time periods, each of said unavailable time periods being one of: a time period (10, 310, 320, 410, 510, 530, 20, 380, 390, 470) when the receiver (120) is allocated to operate with one of the first or the at least a second communication system; or a time period (30, 330, 340, 420, 520, 540) when a transmitter (130) of the communication device (100) is allocated to operate with the first communication system;
identifying (220) time gaps (60, 70, 371, 372, 373, 374, 375, 430) between the end of an unavailable time period and the start of a consecutive unavailable time period;
**characterised by**
determining (230) the shortest time gap (60, 371, 375, 430) from the identified time gaps; and
allocating (240) the measurement time period (40, 350, 360, 450) in the shortest determined time gap, substantially adjacent an unavailable time period.

2. The method of claim 1, wherein each of the plurality of unavailable time periods is a time period when the receiver is allocated to operate with one of the first or the at least a second communication system.

3. The method of any preceding claim, wherein the time taken to switch the receiver (120) from being configured for operation with one communication system to operation with another communication system is less than the time taken to switch the transmitter (130) between on and off states and wherein the unavailable time period in the step of allocating is a time period when the receiver is allocated to operate with one of: the first; or the at least a second communication system.

4. The method of any preceding claim, wherein the measurement time period has a predetermined duration, and wherein the step of determining comprises determining the shortest time gap from the identified time gaps that are at least the predetermined duration in length.

5. The method of any preceding claim, wherein the measurement time period is a first measurement time period (350, 450, 550) and is a time period when the receiver (120) is allocated to operate with the first communication system, further comprising:
repeating the steps of identifying a plurality of unavailable time periods, identifying time gaps, and determining the shortest time gap; and
allocating a second measurement time period (360, 460, 560) for the first communication system in the shortest determined time gap, substantially adjacent an unavailable time period.

6. The method of claim 5, wherein the unavailable time period in the step of allocating a second measurement time period is a time period when the receiver (120) is allocated to operate with one of: the first; or the at least a second communication system.

7. A method of allocating a number of measurement time periods for a receiver (120) of a communication device (100) for a first communication system, the receiver (120) being configured for operation with the first communication system and with at least a second communication system, the method comprising:
determining a frame time period;
determining (200) the number of measurement time periods to be allocated within the frame time period; and
allocating (240, 250) a measurement time period for each of the determined number of measurement time periods according to the method of any preceding claim.

8. The method of any preceding claim, further comprising, following the step of allocating:
identifying at least one free-receiver time period, each of the at least one free-receiver free time periods being a time period when the receiver (120) is not allocated to operate with the first communication system;
allocating at least one time period for operation of the receiver (120) with the at least a second communication system in the at least one free-receiver time period.

9. A communication device (100) for operation with a first communication system and with at least a second communication system, the communication device comprising:
a transmitter (130), configured for operation with the first communication system;
a receiver (120), configured for operation with the first communication system and with the at least a second communication system; and
a processor (140), configured to identify a plurality of unavailable time periods, each of said unavailable time periods being one of: a time period (10, 310, 320, 410, 510, 530, 20, 380, 390, 470) when the receiver (120) is allocated to operate with one of the first or the at least a second communication system; or a time period (30, 330, 340, 420, 520, 540) when a transmitter (130) of the communication device (100) is allocated to operate with the first communication system, the processor (140) being further configured to identify time gaps (60, 70, 371, 372, 373, 374, 375, 430) between the end of an unavailable time period and the start of a consecutive unavailable time period and being further **characterised by** being configured to determine the shortest time gap (60, 371, 375, 430) from the identified time gaps, and to allocate a measurement time period (40, 350, 360, 450) for the first communication system in the shortest determined time gap, substantially adjacent an unavailable time period.

10. The communication device of claim 9, wherein each of the plurality of unavailable time periods is a time period when the receiver is allocated to operate with one of the first or the at least a second communication system.

11. The communication device of any one of claims 9 to 10, wherein the time taken to switch the receiver (120) from being configured for operation with one communication system to operation with another communication system is less than the time taken to switch the transmitter (130) between on and off states and wherein the unavailable time period in the step of allocating is a time period when the receiver is allocated to operate with one of: the first; or the at least a second communication system.

12. The communication device of any of claims 9 to 11, wherein the measurement time period has a predetermined duration, and wherein the processor (140) is further configured to determine the shortest time gap from the identified time gaps that are at least the predetermined duration in length.

13. The communication device of any of claims 9 to 12, wherein the measurement time period is a first measurement time period (350, 450, 550) and is a time period when the receiver (120) is allocated to operate with the first communication system, and wherein the processor (140) is further configured to again identify a plurality of unavailable time periods, to again identify time gaps, to again determine the shortest time gap, and wherein the processor (140) is configured to allocate a second measurement time period (360, 460, 560) for the first communication system in the shortest determined time gap, substantially adjacent an unavailable time period.

14. The communication device of claim 13, wherein the processor (140) is configured to allocate a second measurement time period on the basis of an unavailable time period, the unavailable time period being one of: a time period when the receiver (120) is allocated to operate with one of: the first; or the at least a second communication system; or a measurement time period.

15. The communication device of any of claims 9 to 14, wherein the processor (140) is further configured to determine a frame time period and to determine the number of measurement time periods to be allocated within the frame time period.

16. The communication device of any of claims 9 to 15, wherein the processor (140) is further configured to identify at least one free-receiver time period, each of the at least one free-receiver free time periods being a time period when the receiver (120) is not allocated to operate with the first communication system, and to allocate at least one time period for operation of the receiver with the at least a second communication system in the at least one free-receiver time period.

## Patentansprüche

1. Verfahren zur Zuweisung einer Messzeitperiode für einen Empfänger (120) einer Kommunikationsvorrichtung (100) für ein erstes Kommunikationssystem, wobei der Empfänger (120) zum Betrieb mit dem ersten Kommunikationssystem und mit mindestens einem zweiten Kommunikationssystem konfiguriert ist, wobei das Verfahren die folgenden Schritte aufweist:
Bestimmung (210) einer Vielzahl nicht verfügbarer Zeitperioden, wobei alle nicht verfügbaren Zeitperioden die folgenden Zeitperioden umfassen: eine Zeitperiode (10, 310, 320, 410, 510, 530, 20, 380, 390, 470), während welcher der Empfänger (120) zum Betrieb mit entweder dem ersten Kommunikationssystem oder mit dem mindestens einen zweiten Kommunikationssystem zugeteilt ist; oder eine Zeitperiode (30, 330, 340, 420, 520, 540), während welcher ein Transmitter (130) der Kommunikationsvorrichtung (100) zum Betrieb mit dem ersten Kommunikationssystem zugeteilt ist;
Bestimmung (220) von Zeitlücken (60, 70, 371, 372, 373, 374, 375, 430) zwischen dem Ende einer nicht verfügbaren Zeitperiode und dem Beginn einer nachfolgenden nicht verfügbaren Zeitperiode;
**gekennzeichnet durch**:
die Bestimmung (230) der kürzesten Zeitlücke (60, 371, 375, 430) aus den ermittelten Zeitlücken; und
die Zuteilung bzw. Zuweisung (240) der Messzeitperiode (40, 350, 360, 450) in der kürzesten bestimmten Zeitlücke, welche im Wesentlichen neben einer nicht verfügbaren Zeitperiode liegt.

2. Verfahren nach Anspruch 1, **dadurch gekennzeichnet, dass** jede aus der Vielzahl nicht verfügbarer Zeitperioden eine Zeitperiode ist, während welcher der Empfänger zum Betrieb mit entweder dem ersten oder dem mindestens einen zweiten Kommunikationssystem zugeteilt ist.

3. Verfahren nach einem der vorhergehenden Ansprüche, **dadurch gekennzeichnet, dass** die zum Umschalten des Empfängers (120) benötigte Zeit von einer Konfiguration zum Betrieb mit einem Kommunikationssystem zu einer Konfiguration zum Betrieb mit einem anderen Kommunikationssystem geringer ist als die Zeit, welche zum Umschalten des Transmitters (130) zwischen einem eingeschalteten und einem ausgeschalteten Zustand benötigt wird, und dass die nicht verfügbare Zeitperiode in dem Zuteilungs- bzw. Zuweisungsschritt eine Zeitperiode ist, während welcher der Empfänger zum Betrieb mit entweder dem ersten oder dem mindestens einen zweiten Kommunikationssystem zugeteilt ist.

4. Verfahren nach einem der vorhergehenden Ansprüche, **dadurch gekennzeichnet, dass** die Messzeitperiode eine vorher festgelegte Dauer aufweist, und dass der Schritt der Bestimmung die Bestimmung der kürzesten Zeitlücke aus den ermittelten Zeitlücken aufweist, welche zumindest der vorher festgelegten Zeitdauer bzw. Zeitlänge entsprechen.

5. Verfahren nach einem der vorhergehenden Ansprüche, **dadurch gekennzeichnet, dass** die Messzeitperiode eine erste Messzeitperiode (350, 450, 550) ist und eine Zeitperiode ist, während welcher der Empfänger (120) zum Betrieb mit dem ersten Kommunikationssystem zugeteilt ist, wobei das Verfahren des Weiteren die folgenden Schritte aufweist:
Wiederholung der Schritte der Ermittlung einer Vielzahl nicht verfügbarer Zeitperioden, der Ermittlung von Zeitlücken und der Bestimmung der kürzesten Zeitlücke; und
Zuteilung einer zweiten Messzeitperiode (360, 460, 560) für das erste Kommunikationssystem in der kürzesten bestimmten Zeitlücke, welche im Wesentlichen neben einer nicht verfügbaren Zeitperiode liegt.

6. Verfahren nach Anspruch 5, **dadurch gekennzeichnet, dass** die nicht verfügbare Zeitperiode in dem Schritt der Zuteilung einer zweiten Messzeitperiode eine Zeitperiode ist, während welcher der Empfänger (120) zum Betrieb mit entweder dem ersten oder dem mindestens einen zweiten Kommunikationssystem zugeteilt ist.

7. Verfahren zur Zuteilung bzw. Zuweisung einer Reihe von Messzeitperioden für einen Empfänger (120) einer Kommunikationsvorrichtung (100) für ein erstes Kommunikationssystem, wobei der Empfänger (120) zum Betrieb mit dem ersten Kommunikationssystem und mit dem mindestens einen zweiten Kommunikationssystem konfiguriert ist, wobei das Verfahren die folgenden Schritte aufweist:
Bestimmung einer Rahmenzeitperiode;
Bestimmung (200) der Anzahl von Messzeitperioden, welche innerhalb der Rahmenzeitperiode zugeteilt werden sollen; und
Zuteilung bzw. Zuweisung (240, 250) einer Messzeitperiode für jede aus der bestimmten Anzahl von Messzeitperioden gemäß dem Verfahren nach einem der vorhergehenden Ansprüche.

8. Verfahren nach einem der vorhergehenden Ansprüche, welches im Anschluss an den Schritt der Zuweisung bzw. Zuteilung des Weiteren die folgenden Schritte aufweist:
Bestimmung mindestens einer für den Empfänger betriebsfreien Zeitperiode, wobei die mindestens eine für den Empänger betriebsfreie Zeitperiode eine Zeitperiode ist, während welcher der Empfänger (120) nicht zum Betrieb mit dem ersten Kommunikationssystem zugeteilt ist; und
Zuteilung bzw. Zuweisung mindestens einer Zeitperiode zum Betrieb des Empfängers (120) mit dem mindestens einen zweiten Kommunikationssystem in der mindestens einen für den Empfänger betriebsfreien Zeitperiode.

9. Kommunikationsvorrichtung (100) zum Betrieb mit einem ersten Kommunikationssystem und mit mindestens einem zweiten Kommunikationssystem, wobei die Kommunikationsvorrichtung Folgendes aufweist:
einen Transmitter (130), welcher zum Betrieb mit dem ersten Kommunikationssystem konfiguriert ist;
einen Empfänger (120), welcher zum Betrieb mit dem ersten Kommunikationssystem und mit dem mindestens einen zweiten Kommunikationssystem ausgelegt ist; und
einen Prozessor (140), welcher zur Bestimmung einer Vielzahl nicht verfügbarer Zeitperioden konfiguriert ist, zu welchen die folgenden Zeitperioden gehören: eine Zeitperiode (10, 310, 320, 410, 510, 530, 20, 380, 390, 470), während welcher der Empfänger (120) zum Betrieb mit entweder dem ersten oder dem mindestens einen zweiten Kommunikationssystem zugeteilt ist; oder eine Zeitperiode (30, 330, 340, 420, 520, 540), während welcher ein Transmitter (130) der Kommunikationsvorrichtung (100) zum Betrieb mit dem ersten Kommunikationssystem zugeteilt ist, wobei der Prozessor des Weiteren zur Ermittlung von Zeitlücken (60, 70, 371, 372, 373, 374, 375, 430) zwischen dem Ende einer nicht verfügbaren Zeitperiode und dem Beginn einer nachfolgenden nicht verfügbaren Zeitperiode konfiguriert ist, und des Weiteren **dadurch gekennzeichnet ist, dass** er zur Bestimmung der kürzesten Zeitlücke (60, 371, 375, 430) aus den ermittelten Zeitlücken und zur Zuteilung bzw. Zuweisung einer Messzeitperiode (40, 350, 360, 450) für das erste Kommunikationssystem in der kürzesten bestimmten Zeitlücke konfiguriert ist, welche im Wesentlichen neben einer nicht verfügbaren Zeitperiode liegt.

10. Kommunikationsvorrichtung nach Anspruch 9, **dadurch gekennzeichnet, dass** jede aus der Vielzahl nicht verfügbarer Zeitperioden eine Zeitperiode ist, während welcher der Empfänger zum Betrieb mit entweder dem ersten oder dem mindestens einen zweiten Kommunikationssystem zugeteilt ist.

11. Kommunikationsvorrichtung nach einem der Ansprüche 9 oder 10, **dadurch gekennzeichnet, dass** die Zeit, welche zum Umschalten des Empfängers (120) von einer Konfiguration für den Betrieb mit einem Kommunikationssystem zu einer Konfiguration für den Betrieb mit einem anderen Kommunikationssystem benötigt wird, geringer ist als die Zeit, welche zum Umschalten des Transmitters (130) zwischen einem eingeschalteten und einem ausgeschalteten Zustand benötigt wird, und dass die nicht verfügbare Zeitperiode in dem Schritt der Zuteilung bzw. Zuweisung eine Zeitperiode ist, während welcher der Empfänger zum Betrieb mit entweder dem ersten oder dem mindestens einen zweiten Kommunikationssystem zugeteilt ist.

12. Kommunikationsvorrichtung nach einem der Ansprüche 9 bis 11, **dadurch gekennzeichnet, dass** die Messzeitperiode eine vorher festgelegte Dauer aufweist, und dass der Prozessor (140) des Weiteren zur Bestimmung der kürzesten Zeitlücke aus den ermittelten Zeitlücken, welche zumindest der vorher festgelegten Zeitlänge bzw. Dauer entsprechen, konfiguriert ist.

13. Kommunikationsvorrichtung nach einem der Ansprüche 9 bis 12, **dadurch gekennzeichnet, dass** die Messzeitperiode eine erste Messzeitperiode (350, 450, 550) ist und eine Zeitperiode ist, während welcher der Empfänger (120) zum Betrieb mit dem ersten Kommunikationssystem zugeteilt ist, und dass der Prozessor (140) des Weiteren derart konfiguriert ist, dass er erneut eine Vielzahl nicht verfügbarer Zeitperioden ermittelt, um erneut Zeitlücken zu ermitteln und um erneut die kürzeste Zeitlücke zu bestimmen, und dass der Prozessor (140) derart konfiguriert ist, dass er eine zweite Messzeitperiode (360, 460, 560) für das erste Kommunikationssystem in der kürzesten bestimmten Zeitlücke zuteilt bzw. zuweist, welche im Wesentlichen neben einer nicht verfügbaren Zeitperiode liegt.

14. Kommunikationsvorrichtung nach Anspruch 13, **dadurch gekennzeichnet, dass** der Prozessor (140) derart konfiguriert ist, dass er eine zweite Messzeitperiode auf der Basis einer nicht verfügbaren Zeitperiode zuteilt bzw. zuweist, wobei die nicht verfügbare Zeitperiode eine der folgenden Zeitperioden ist: eine Zeitperiode, während welcher der Empfänger (120) zum Betrieb mit entweder dem ersten oder dem mindestens einen zweiten Kommunikationssystem zugeteilt ist; oder eine Messzeitperiode.

15. Kommunikationsvorrichtung nach einem der Ansprüche 9 bis 14, **dadurch gekennzeichnet, dass** der Prozessor (140) des Weiteren zur Bestimmung einer Rahmen-Zeitperiode und zur Bestimmung der Anzahl an Messzeitperioden, welche innerhalb der Rahmen-Zeitperiode zugeteilt werden soll, konfiguriert ist.

16. Kommunikationsvorrichtung nach einem der Ansprüche 9 bis 15, **dadurch gekennzeichnet, dass** der Prozessor (140) des Weiteren zur Bestimmung mindestens einer für den Empfänger betriebsfreien Zeitperiode konfiguriert ist, wobei jede der mindestens einen für den Empfänger betriebsfreien Zeitperiode eine Zeitperiode ist, während welcher der Empfänger (120) nicht zum Betrieb mit dem ersten Kommunikationssystem zugeteilt ist, und weiter zur Zuteilung bzw. Zuweisung mindestens einer Zeitperiode zum Betrieb des Empfängers mit dem mindestens einen zweiten Kommunikationssystem in der mindestens einen für den Empfänger betriebsfreien Zeitperiode konfiguriert ist.

## Revendications

1. Procédé pour allouer une période de temps de mesure à un récepteur (120) d'un dispositif de communication (100) pour un premier système de communication, le récepteur (120) étant configuré pour le fonctionnement avec le premier système de communication et avec au moins un deuxième système de communication, le procédé comprenant:
identifier (210) une pluralité de périodes de temps non disponibles, chacune desdites périodes de temps non disponibles étant une de: une période de temps (10, 310, 320, 410, 510, 530, 20, 380, 390, 470) lorsque le récepteur (120) est autorisé à fonctionner avec un du premier ou du au moins un deuxième système de communication; ou une période de temps (30, 330, 340, 420, 520, 540) lorsqu'un émetteur (130) du dispositif de communication (100) est autorisé à fonctionner avec le premier système de communication;
identifier (220) des laps de temps (60, 70, 371, 372, 373, 374, 375, 430) entre la fin d'une période de temps non disponible et le début d'une période de temps non disponible suivante;
**caractérisé par** la détermination (230) du laps de temps le plus court (60, 371, 375, 430) parmi les laps de temps identifiés; et
l'allocation (240) de la période de temps de mesure (40, 350, 360, 450) dans le laps de temps le plus court déterminé, sensiblement adjacent à une période de temps non disponible.

2. Procédé selon la revendication 1, dans lequel chacune de la pluralité de périodes de temps non disponibles est une période de temps où le récepteur est autorisé à fonctionner avec un du premier ou du au moins un deuxième système de communication.

3. Procédé selon l'une quelconque des revendications précédentes, dans lequel le temps pris pour commuter le récepteur (120) de sa configuration pour le fonctionnement avec un système de communication à un fonctionnement avec un autre système de communication est plus court que le temps pris pour commuter l'émetteur (130) entre des états en et hors service, et où la période de temps non disponible dans l'étape d'allocation est une période de temps où le récepteur est autorisé à fonctionner avec un du premier ou du au moins un deuxième système de communication.

4. Procédé selon l'une quelconque des revendications précédentes, dans lequel la période de temps de mesure a une durée prédéterminée, et où l'étape de détermination comprend la détermination du laps de temps le plus court parmi les laps de temps identifiés qui sont au moins la durée prédéterminée en longueur.

5. Procédé selon l'une quelconque des revendications précédentes, dans lequel la période de temps de mesure est une première période de temps de mesure (350, 450, 550) et est une période de temps où le récepteur (120) est autorisé à fonctionner avec le premier système de communication, comprenant en outre:
répéter les étapes consistant à identifier une pluralité de périodes de temps non disponibles, identifier les laps de temps et déterminer le laps de temps le plus court; et
allouer une deuxième période de temps de mesure (360, 460, 560) pour le premier système de communication dans le laps de temps déterminé le plus court, sensiblement adjacent à une période de temps non disponible.

6. Procédé selon la revendication 5, dans lequel la période de temps non disponible dans l'étape d'allouer une deuxième période de temps de mesure est une période de temps lorsque le récepteur (120) est autorisé à fonctionner avec un du premier ou du au moins un deuxième système de communication.

7. Procédé pour allouer un nombre de périodes de temps de mesure pour un récepteur (120) d'un dispositif de communication (100) pour un premier système de communication, le récepteur (120) étant configuré pour le fonctionnement avec le premier système de communication et avec au moins un deuxième système de communication, le procédé comprenant:
déterminer une période de temps de trame;
déterminer (200) le nombre de périodes de temps de mesure à allouer dans la période de temps de trame; et
allouer (240, 250) une période de temps de mesure pour chacune du nombre déterminé de périodes de temps de mesure selon le procédé d'une quelconque des revendications précédentes.

8. Procédé selon l'une quelconque des revendications précédentes, comprenant en outre, à la suite de l'étape consistant à allouer:
identifier au moins une période de temps de récepteur libre, chacune de la au moins une période de temps libre de récepteur libre étant une période de temps où le récepteur (120) n'est pas autorisé à fonctionner avec le premier système de communication;
allouer au moins une période de temps pour le fonctionnement du récepteur (120) avec le au moins un deuxième système de communication dans la au moins une période de temps de récepteur libre.

9. Dispositif de communication (100) pour le fonctionnement avec un premier système de communication et avec au moins un deuxième système de communication, le dispositif de communication comprenant:
un émetteur (130), configuré pour le fonctionnement avec le premier système de communication;
un récepteur (120), configuré pour le fonctionnement avec le premier système de communication et avec le au moins un deuxième système de communication; et
un processeur (140) configuré pour identifier une pluralité de périodes de temps non disponibles, chacune desdites périodes de temps non disponibles étant une de: une période de temps (10, 310, 320, 410, 510, 530, 20, 380, 390, 470) où le récepteur (120) est autorisé de fonctionner avec un du premier ou du au moins un deuxième système de communication; ou une période de temps (30, 330, 340, 420, 520, 540) lorsqu'un émetteur (130) du dispositif de communication (100) est autorisé de fonctionner avec le premier système de communication, le processeur (140) étant configuré en outre pour identifier des laps de temps (60, 70, 371, 372, 373, 374, 375, 430) entre la fin d'une période de temps non disponible et le début d'une période de temps non disponible suivante et étant **caractérisé en** outre en étant configuré pour déterminer le laps de temps le plus court (60, 371, 375, 430) des laps de temps identifiés, et pour allouer une période de temps de mesure (40, 350, 360, 450) pour le premier système de communication dans le laps de temps le plus court déterminé, sensiblement adjacente à une période de temps non disponible.

10. Dispositif de communication selon la revendication 9, dans lequel chacune de la pluralité de périodes de temps non disponibles est une période de temps où le récepteur est autorisé de fonctionner avec un du premier ou du au moins un deuxième système de communication.

11. Dispositif de communication selon l'une quelconque des revendications 9 à 10, dans lequel le temps pris pour commuter le récepteur (120) de sa configuration pour le fonctionnement avec un système de communication au fonctionnement avec un autre système de communication est plus court que le temps pris pour commuter l'émetteur (130) entre des états en et hors service, et où la période de temps non disponible dans l'étape d'allocation est une période de temps où le récepteur est autorisé à fonctionner avec un du premier ou du au moins un deuxième système de communication.

12. Dispositif de communication selon l'une quelconque des revendications 9 à 11, dans lequel la période de temps de mesure a une durée prédéterminée, et où le processeur (140) est configuré en outre pour déterminer le laps de temps le plus court parmi les laps de temps identifiés qui sont au moins la durée prédéterminée en longueur.

13. Dispositif de communication selon l'une quelconque des revendications 9 à 12, dans lequel la période de temps de mesure est une première période de temps de mesure (350, 450, 550) et est une période de temps où le récepteur (120) est autorisé de fonctionner avec le premier système de communication, et où le processeur (140) est configuré en outre pour identifier à nouveau une pluralité de périodes de temps non disponibles pour identifier à nouveau des laps de temps, pour déterminer à nouveau le laps de temps le plus court, et où le processeur (140) est configuré pour allouer une deuxième période de temps de mesure (360, 460, 560) au premier système de communication dans le laps de temps le plus court déterminé, sensiblement adjacente à une période de temps non disponible.

14. Dispositif de communication selon la revendication 13, dans lequel le processeur (140) est configuré pour allouer une deuxième période de temps de mesure sur la base d'une période de temps non disponible, la période de temps non disponible étant une de: une période de temps lorsque le récepteur (120) est autorisé de fonctionner avec un du premier ou du au moins un deuxième système de communication; ou une période de temps de mesure.

15. Dispositif de communication selon l'une quelconque des revendications 9 à 14, dans lequel le processeur (140) est configuré en outre pour déterminer une période de temps de trame et pour déterminer le nombre de périodes de temps de mesure à allouer dans la période de temps de trame.

16. Dispositif de communication selon l'une quelconque des revendications 9 à 15, dans lequel le processeur (140) est configuré en outre pour identifier au moins une période de temps de récepteur libre, chacune des au moins une période de temps libre de récepteur libre étant une période de temps où le récepteur (120) n'est pas autorisé à fonctionner avec le premier système de communication, et pour allouer au moins une période de temps pour le fonctionnement du récepteur avec le au moins un deuxième système de communication dans la au moins une période de temps de récepteur libre.
